# EUROPÄISCHE PATENTSCHRIFT

(11) **EP 3 391 631 B1**
(45) Veröffentlichungstag und Bekanntmachung des Hinweises auf die Patenterteilung: **11.09.2019**
(21) Anmeldenummer: 16826017.2
(22) Anmeldetag: 15.12.2016
(51) Int. Cl.: H04M 1/04, F16M 11/04, F16M 11/10

(54) **ADAPTER FÜR HALTEVORRICHTUNG**
ADAPTER FOR A HOLDING DEVICE
ADAPTATEUR POUR UN DISPOSITIF SUPPORT

(30) Priorität: 17.12.2015 DE 102015122072
(43) Veröffentlichungstag der Anmeldung: 24.10.2018
(73) Patentinhaber: Sam Sport And Marketing AG, 8596 Scherzingen (CH)
(72) Erfinder: KRENN, Thomas, 2380 Perchtoldsdorf (AT)
(74) Vertreter: Schrooten, Rolf
(86) Internationale Anmeldenummer: PCT/EP2016/081296
(87) Internationale Veröffentlichungsnummer: WO 2017/103011

(56) Entgegenhaltungen:
- US-A1- 2013 181 584
- US-A1- 2013 318 775
- US-A1- 2015 136 933
- US-A1- 2015 144 755

## Beschreibung

Die vorliegende Erfindung betrifft einen Adapter nach dem Oberbegriff von Anspruch 1. Er dient der lösbaren Befestigung von beliebigen mobilen, tragbaren und mit der Hand haltbaren Geräten oder Gegenständen an einer Haltevorrichtung, die an einem anderen Gegenstand angebracht ist. Mit Hilfe des Adapters können auf diese Weise beispielsweise kleine Behälter, Etuis, Taschen oder Gehäuse, die zur Aufbewahrung oder Aufnahme weiterer Gegenstände vorgesehen sind, oder elektrische Apparate oder Geräte wie zum Beispiel Lampen, Lautsprecher, Kameras, Musikwiedergabegeräte, Navigationsgeräte, Mobiltelefone, Smartphones, mobile Computer, PDAs, oder auch Zubehör für derartige Geräte wie beispielsweise externe Akku- oder Batterieeinheiten an einer Haltevorrichtung befestigt werden, welche ihrerseits an einem anderen beweglichen oder feststehenden Gegenstand montiert ist, beispielsweise an einem Sportgerät, an einem Fahrrad oder an einem sonstigen Fahrzeug, an einer Trage- oder Halteeinrichtung wie zum Beispiel einem Stativ oder an einem Gebäude oder an einem Einrichtungsgegenstand eines Gebäudes.

Derartige Adapter sind dabei nicht nur in der Form separater Komponenten, sondern auch als integrierter Bestandteil eines Gegenstands, welcher an einer Haltevorrichtung befestigt werden soll, bekannt. So ist beispielsweise aus der WO 2013/106849 A1 ein Gehäuse für eine handhaltbare elektronische Vorrichtung bekannt, in das ein Adapter integriert ist, über den das Gehäuse lösbar an einer zugehörigen und speziell nur an diesen Adapter angepassten Haltevorrichtung montiert werden kann.

Aus der US 2015/0136933 A1 ist ein System zur lösbaren Montage einer handhaltbaren elektronischen Vorrichtung an einer Oberfläche bekannt, wobei einerseits eine Montageplatte an der Oberfläche befestigt wird und andererseits eine an diese Montageplatte angepasste und hiermit koppelbare Grundplatte die elektronische Vorrichtung aufnimmt.

Eine weitere Vorrichtung und ein weiteres System für eine lösbare Montage einer tragbaren elektronischen Vorrichtung an einer Oberfläche ist aus der WO 2014/145748 A1 bekannt. Die elektronische Vorrichtung kann beispielsweise ein Smartphone oder ein Navigationssystem sein, das lösbar an einer glatten Oberfläche eines Kraftfahrzeugs oder in einem Gebäude angebracht werden soll.

Aus der US 2013/0318775 A1 ist ebenfalls ein System zur Montage einer handhaltbaren elektronischen Vorrichtung bekannt, welches zwei miteinander zusammenwirkende Komponenten umfasst, von denen eine erste Komponente als Adapter in einem Gehäuse für eine elektronischen Vorrichtung ausgebildet ist, während die andere Komponente eine Haltevorrichtung bildet, an der das Gehäuse mittels des Adapters befestigt werden kann. Alternativ ist der Adapter auch unabhängig von einem derartigen Gehäuse erhältlich, wobei er dann einen Universal-Adapter bildet, der unmittelbar an handhaltbaren elektronischen Vorrichtungen angebracht, beispielsweise angeklebt werden kann.

Ein derartiger Adapter umfasst eine Grundplatte und mindestens zwei drehfest hiermit verbundene oder einstückig hiermit ausgeführte Vorsprünge, die in einem Abstand zu der Grundplatte mit jeweils einem freien Endbereich vorstehen.

Bei den vorgenannten Systemen erfolgt die Befestigung durch eine relative Verdrehung des Adapters gegenüber der speziell an diesen Adapter angepassten Haltevorrichtung.

Es sind jedoch auch andere Haltevorrichtungen bekannt, an denen ein Gerät oder ein Gegenstand durch eine geradlinige Schiebebewegung befestigt werden kann. Insbesondere zur Befestigung von Action-Kameras sind Haltevorrichtungen bekannt, die zwei seitliche Führungswangen mit oberen Haltestegen aufweisen, zwischen welche ein ebenfalls speziell daran angepasster Einschubadapter eingeschoben und eingerastet werden kann.

Aufgabe der vorliegenden Erfindung ist es, einen konstruktiv einfachen und leicht handhabbaren Adapter der eingangs genannten Art zu schaffen, der eine sichere Befestigung durch eine schnell ausführbare Drehbewegung auch an einer für eine Schiebebewegung ausgelegten Haltevorrichtung ermöglicht.

Diese Aufgabe wird erfindungsgemäß durch einen Adapter mit den Merkmalen von Anspruch 1 gelöst. Vorteilhafte Ausgestaltungen und Weiterbildungen der Erfindung ergeben sich aus den abhängigen Ansprüchen.

Wesentlich bei der erfindungsgemäßen Lösung ist es, dass die zwei Vorsprünge sich in einander entgegen gesetzter Richtung von einander weggerichtet nach außen erstrecken, und dass an der Grundplatte eine hierzu parallele Führungsscheibe gelagert ist, die zwischen mindestens einer Freigabeposition und mindestens einer Verriegelungsposition zumindest um einen vorbestimmten Winkel von insbesondere 90° begrenzt verdrehbar oder ohne Begrenzung frei drehbar gelagert ist, wobei die Führungsscheibe eine zentrale durchgehende Öffnung aufweist, welche die beiden sich nach außen erstreckenden Vorsprünge in sich aufnimmt, und wobei die Öffnung in ihrer Kontur zwei bezogen auf den Mittelpunkt der Öffnung einander gegenüberliegende Einsteckbereiche umfasst, in die zwei Führungswangen einer zum Zusammenwirken mit dem Adapter geeigneten Haltevorrichtung zumindest teilweise eingesteckt werden können, wenn die Führungsscheibe sich in einer Freigabeposition befindet. Unter einer geeigneten Haltevorrichtung ist dabei eine solche Haltevorrichtung zu verstehen, die hinsichtlich ihrer geometrischen Abmessungen zu dem Adapter passt, und die zwei Führungswangen aufweist, welche in die beiden Einsteckbereiche eingesteckt werden können.

Der Hauptvorteil liegt dabei darin, dass der Adapter trotz einer durch Verdrehen ausführbaren Bewegung auch an solchen Haltevorrichtungen befestigt werden kann, die eigentlich für eine geradlinige Befestigung eines anderen Adapters ausgelegt sind. Deshalb sind für den neu vorgeschlagenen Adapter keine speziell an die Drehbewegung angepassten Haltervorrichtungen mehr notwendig, sondern es können bereits vorhandene Einschub-Haltevorrichten mitbenutzt werden. Das bedeutet für Anwender einen deutlichen Mehrwert bei der Nutzung derartiger auf ein Einschieben ausgelegter Haltevorrichten, an denen jetzt nicht nur herkömmliche Einschubadapter, sondern bei Verwendung des erfindungsgemäßen Adapters Geräte oder Gegenstände auch auf eine grundsätzlich verschiedene Art und Weise befestigt werden können, was die Einsatzmöglichkeiten der vorhandenen Haltevorrichtungen erheblich erweitert.

Der erfindungsgemäße Adapter zeichnet sich durch eine einfache Konstruktion und leichte Handhabung aus. Er kann entweder in ein Gerät oder einen Gegenstand integriert oder aber als eine eigenständige Vorrichtung ausgeführt sein, die über daran vorgesehene Befestigungsmittel an einem beliebigen Gerät oder an einem beliebigen Gegenstand angebracht bzw. damit verbunden werden kann. So kann der Adapter beispielsweise für eine stoffschlüssige Befestigung mit Klebemitteln oder für die Ausführung einer Schraubverbindung mit Bohrungen versehen sein. Auch kann der Adapter insbesondere an textilen Materialien oder Kunststoffen angenäht werden. In allen Fällen gewährleistet er eine durch eine Drehbewegung einfach und schnell ausführbare Befestigung und gleichzeitig einen sicheren und zuverlässigen Halt eines mit dem Adapter verbundenen Gerätes oder Gegenstandes an einer Haltevorrichtung.

Besonders vorteilhaft ist es, wenn jeder der beiden Vorsprünge sich mit seinem freien Ende in einen Teilbereich von einem der beiden Einsteckbereiche der Öffnung der Führungsscheibe erstreckt, wenn sich die Führungsscheibe in einer Verriegelungsposition befindet. Jeder Vorsprung kann dann einen Haltebereich übergreifen, welcher an einem der beiden Führungswangen einer in den Adapter eingesteckten Haltevorrichtung vorsteht, so dass der Adapter an der Haltevorrichtung verriegelt bzw. befestigt ist. Wenn die Führungsscheibe hingegen in eine Freigabeposition gedreht ist, befinden sich die beiden Vorsprünge jeweils zumindest so weit außerhalb der Einsteckbereiche, dass das Einstecken einer Haltevorrichtung in den Adapter oder das Entnehmen einer eingesteckten Haltevorrichtung aus dem Adapter ausgeführt werden kann.

Eine besonders einfache und dennoch stabile Ausführungsform des Adapters kann dadurch erreicht werden, dass die Führungsscheibe an ihrem Außenumfang kreisrund ausgebildet ist, wobei ihr Außenumfang zumindest abschnittsweise von mindestens einem an der Grundplatte befestigten, vorzugsweise ringförmig ausgebildeten Lagerelement übergriffen ist, um auf diese Weise die drehbare Lagerung der Führungsscheibe an der Grundplatte auszuführen.

Besonders vorteilhaft ist es ferner, wenn die beiden Vorsprünge über einen in der Öffnung der Führungsscheibe verlaufenden zentralen Sockel mit der Grundplatte verbunden sind, wobei sich die Vorsprünge von dem Sockel ausgehend in einander entgegen gesetzter Richtung nach außen erstrecken. Der Zentralsockel bildet dabei eine Achse, auf die die mittige Öffnung und die Führungsscheibe zentriert sind.

Vorteilhafterweise sind die beiden Vorsprünge in der Form von flachen Stegen ausgebildet, die in einem Abstand parallel zu der Grundplatte verlaufen. Auf diese Weise wird zwischen der Grundplatte und den Vorsprüngen ein Zwischenraum gebildet, in den ein Haltebereich eingreifen kann, welcher an einer Führungswange von einer in den Adapter eingesteckten Haltevorrichtung seitlich vorsteht.

Gemäß einer besonders bevorzugten Ausführungsform der Erfindung sind an dem Adapter Rastmittel vorhanden, welche die Führungsscheibe in den Verriegelungs- und Freigabepositionen rastend festlegen können. Vorteilhafterweise können die Rastmittel mindestens ein an der Führungsscheibe oder der Grundplatte angeordnetes elastisch federndes Element umfassen, welches in den Rastpositionen in eine an dem jeweils anderen Teil ausgenommene Einkerbung eingreift.

Vorzugsweise ist die Führungsscheibe in zwei um 180° relativ zueinander versetzte Freigabepositionen sowie in zwei dazwischen liegende Verriegelungspositionen drehbar, welche dann je 90° zu den Freigabepositionen versetzt sind. Alternativ können auch mehr als zwei, insbesondere sechs Verriegelungspositionen vorgesehen sein, die in gleichmäßigen oder in ungleichmäßigen Winkelabständen über den Drehbereich der Führungsscheibe verteilt sind. Beispielsweise sind bei insgesamt zwei Freigabepositionen und sechs gleichmäßig verteilten Verriegelungspositionen je zwei einander benachbarte Positionen um 45° zueinander versetzt.

Gemäß einer weiteren bevorzugten Ausführungsform der Erfindung wird vorgeschlagen, die beiden Einsteckbereiche der mittigen Öffnung der Führungsscheibe nach radial außen durch jeweils eine gerade Seitenwand zu begrenzen, wobei diese beiden Seitenwände dann parallel zueinander und senkrecht zu einer radialen Richtung der Führungsscheibe ausgerichtet sind.

Vorteilhafterweise ist der Adapter zum Zusammenwirken mit einer Haltevorrichtung geeignet, welche eine Basisplatte mit zwei in einem Abstand voneinander und parallel zueinander ausgerichteten geraden Führungswangen aufweist, die senkrecht auf der Basisplatte vorstehen. Dabei befindet sich an dem von der Basisplatte abgewandten freien Ende jeder Führungswange jeweils ein Haltesteg, der in Richtung zu dem jeweils anderen Führungssteg seitlich vorsteht. Die beiden Einsteckbereiche in der Öffnung der Führungsscheibe sind dabei zumindest bezüglich ihrer geometrischen Größe derart an die zum Zusammenwirken geeignete Haltevorrichtung angepasst, dass die beiden aufeinander zu gerichteten Haltestege der Haltevorrichtung in die beiden Einsteckbereiche eingesteckt werden können, wenn die Führungsscheibe sich in einer Freigabeposition befindet, und dass die beiden eingesteckten Haltestege von den beiden Vorsprüngen zumindest teilweise übergriffen werden, wenn die Führungsscheibe sich in einer Verriegelungsposition befindet.

Besonders vorteilhaft ist es dabei weiterhin, wenn die beiden Einsteckbereiche mit ihren zueinander parallelen Seitenwänden zumindest hinsichtlich der Länge und das gegenseitigen Abstands der Seitenwände derart an eine zum Zusammenwirken mit dem Adapter geeignete Haltevorrichtung angepasst sind, dass die beiden Führungswangen der Haltevorrichtung mit den daran angeordneten Haltestegen formschlüssig mit leichtem Spiel in die beiden Einsteckbereiche der Öffnung eingesteckt werden können.

Nach einer besonders bevorzugten Ausführungsform der Erfindung ist der Adapter außenseitig in den Boden eines Gehäuses oder einer Dose oder in den Boden einer zur Aufnahme einer tragbaren elektronischen Vorrichtung wie eines Smartphones oder eines Navigationsgerätes vorgesehenen Halterung integriert. Alternativ kann die Grundplatte des Adapters mit einem Klebepad und/oder mit Öffnungen versehen sein, so dass er von einem Benutzer an beliebigen Gegenständen befestigt werden kann.

Gegenstand der vorliegenden Erfindung ist ferner eine Kombination eines Adapters der vorangehend beschriebenen Art mit einer Haltevorrichtung der vorangehend beschriebenen Art, die zum Zusammenwirken mit dem Adapter geeignet ist. Dazu umfasst die Haltevorrichtung eine Basisplatte mit zwei voneinander beabstandete und zueinander parallele Führungswangen, die vorzugsweise senkrecht auf der Basisplatte vorstehen und an deren von der Basisplatte abgewandten freien Ende jeweils ein Haltesteg sich in Richtung zu dem jeweils anderen Führungssteg erstreckt.

Weitere Vorteile und Merkmale der Erfindung ergeben sich aus der nachfolgenden Beschreibung und den in den Zeichnungen dargestellten Ausführungsbeispielen. Es zeigen:

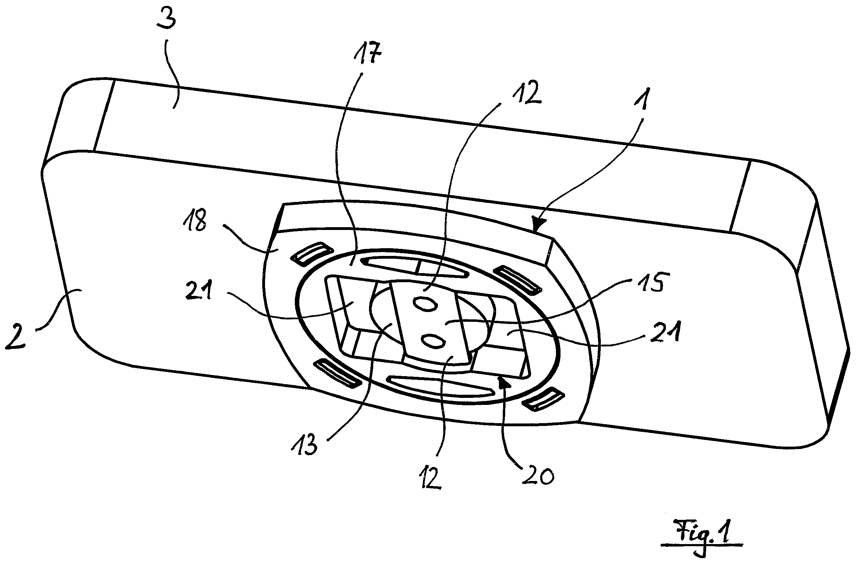

- Figur 1:: eine dreidimensionale Ansicht einer Ausführungsvariante eines erfindungsgemäßen Adapters an einem Gehäuse,
- Figur 2A:: dreidimensionale Ansicht des Gehäuses aus Figur 1 von oben mit einer Haltevorrichtung, wobei sich der Adapter in seiner Freigabeposition befindet,
- Figur 2B:: Ansicht entsprechend Figur 2A, wobei das Gehäuse auf die Haltevorrichtung aufgesetzt und mit dem Adapter in seine Verriegelungsposition gedreht ist,

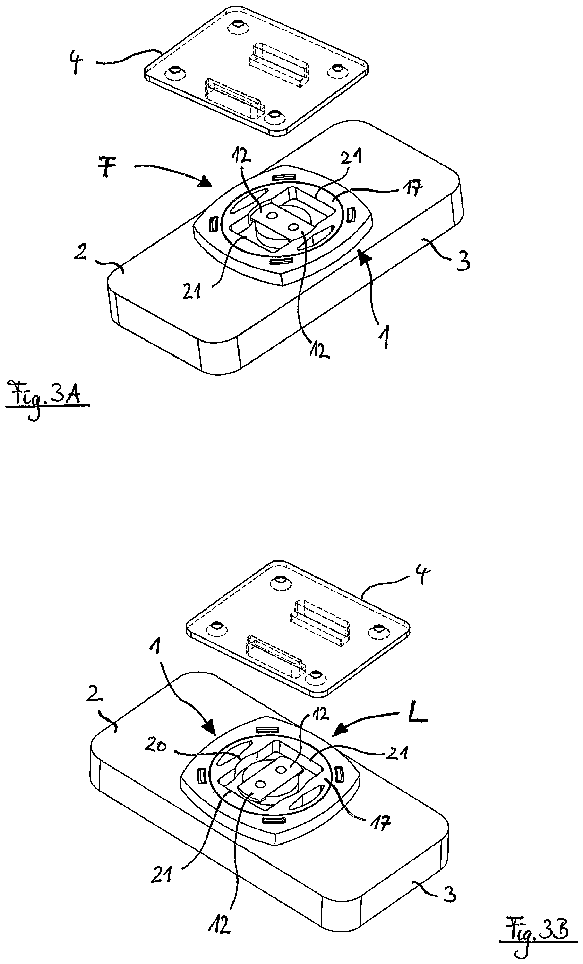

- Figur 3A:: dreidimensionale Ansicht des Gehäuses und der Haltevorrichtung aus Figur 2A von unten, wobei der Adapter sich in seiner Freigabeposition befindet,
- Figur 3B:: dreidimensionale Ansicht des Gehäuses und der Haltevorrichtung aus Figur 3A, wobei der Adapter sich in seiner Verriegelungsposition befindet,
- Figur 4A:: Seitenansicht des Gehäuses und der Haltevorrichtung aus Figur 2A,
- Figur 4B:: Seitenansicht entsprechend Figur 4A, bei der das Gehäuse mit dem Adapter auf die Haltevorrichtung aufgesteckt ist,
- Figur 4C:: Unteransicht zu Figur 4B,
- Figur 4D:: Schnittansicht entlang der Schnittlinie A-A aus Figur 4C,
- Figur 4E:: Schnittansicht entlang der Schnittlinie A1-A1 aus Figur 4B.
- Figur 5A:: Seitenansicht des mit dem Adapter auf die Haltevorrichtung aufgesteckten Gehäuses aus Figur 4B, wobei das Gehäuse mit dem Adapter in die Verriegelungsposition gedreht ist,
- Figur 5B:: Unteransicht zu Figur 5A,
- Figur 5C:: Schnittansicht entlang der Schnittlinie B-B aus Figur 5B,
- Figur5D:: Schnittansicht entlang der Schnittlinie B1-B1 aus Figur 5A.

Der in den Figuren dargestellte Adapter 1 ist als integraler Bestandteil des Bodens 2 von einem Gehäuse 3 ausgeführt. Alternativ könnte er auch als separate Komponente ausgebildet und dann an der Unterseite des Bodens 2 befestigt werden. Das Gehäuse kann durch einen hier nicht dargestellten Deckel verschlossen werden. Alternativ könnte das Gehäuse 3 auch zur Aufnahme eines elektrischen Gerätes, insbesondere eines Smartphones oder eines Navigationsgerätes ausgebildet sein.

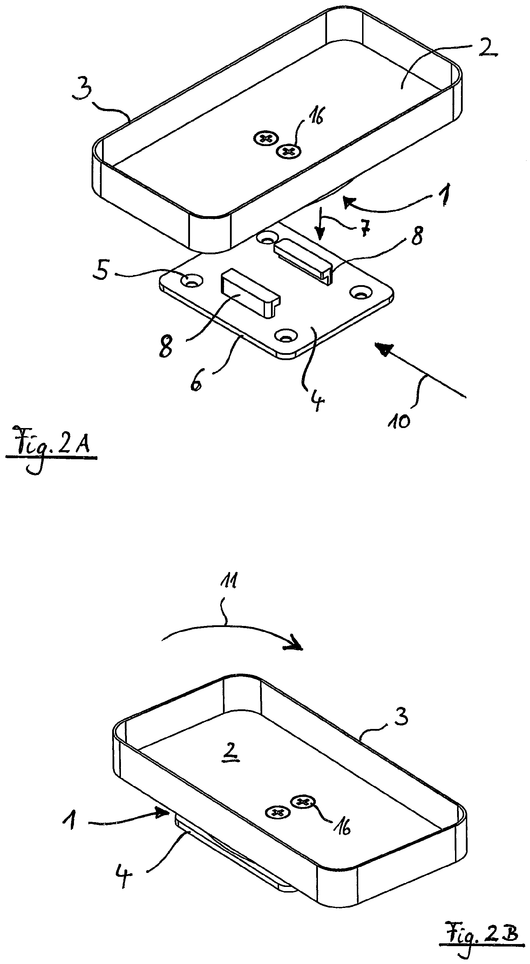

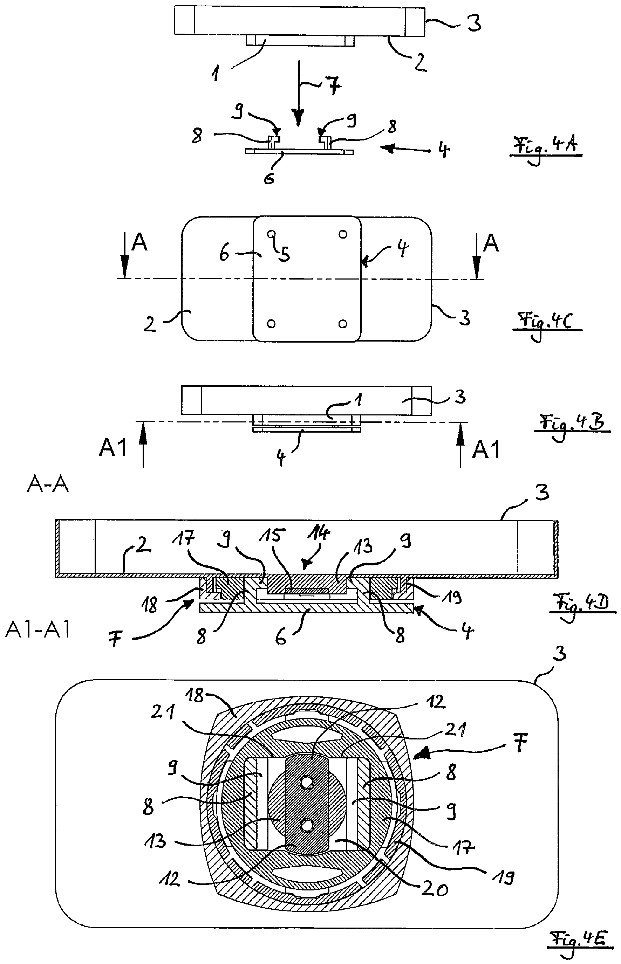

Mit Hilfe des Adapters 1 kann das Gehäuse 3 lösbar an einer Haltevorrichtung 4 befestigt werden, welche ihrerseits über Bohrungen 5 in ihrer Basisplatte 6 an einem anderen Gegenstand befestigt werden kann. Dazu wird der Adapter 1 in Richtung des Pfeils 7 (Figuren 2A und 4A) von oben auf die beiden in einem Abstand voneinander und parallel zueinander ausgerichteten geraden Führungswangen 8 aufweist, die auf der Basisplatte 6 der Haltevorrichtung 4 nach oben vorstehen. Am oberen Ende jeder Führungswange 8 steht ein Haltesteg 9 in Richtung zu der jeweils anderen Führungswange 8 vor, so dass die beiden Haltestege 9 in einem der Höhe der Führungswangen 8 entsprechenden Abstand von der Basisplatte 6 entfernt aufeinander zugewandt sind. So ist die Haltevorrichtung 4 auch zur Aufnahme anderer hier nicht dargestellter Adapter geeignet, die in Richtung des Pfeils 10 in Figur 2A geradlinig zwischen die beiden Führungswangen 8 eingeschoben werden können.

Nach dem Aufsetzen des Adapters 1 auf die Haltevorrichtung 4 kann der Adapter durch eine Drehung des Gehäuses 3 um 90° verriegelt werden, so dass ein sicherer Halt des Gehäuses 3 an der Haltevorrichtung 4 erreicht wird. Diese Drehbewegung ist in Figur 2b durch den Pfeil 11 dargestellt. Zum Abnehmen kann das Gehäuse 3 wieder um 90° in die gleiche oder in die entgegen gesetzte Richtung gedreht und anschließend nach oben von der Haltevorrichtung 4 abgezogen werden.

Der Adapter 1 umfasst zwei Vorsprünge 12 die sich ausgehend von einem zentralen Sockel 13 voneinander weg nach außen erstrecken. Der Sockel 13 verbindet die beiden Vorsprünge 12 mit einer Grundplatte 14 des Adapters 1, die hier aufgrund der integralen Ausführung des Adapters 1 mit dem Gehäuse 3 durch dessen Boden 2 gebildet wird. Die beiden Vorsprünge sind hier durch die beiden Enden einer flachen Platte 15 gebildet, die an dem freien axialen Ende des Sockels 13 durch zwei Schrauben 16 oder durch Nieten befestigt ist.

Parallel zu der Grundplatte 14 ist eine kreisförmige Führungsscheibe 17 um 360° drehbar an dem Adapter 1 gelagert, indem sie an ihrem stufenförmig ausgebildeten Umfang von einem ringförmigen Lagerelement 18 des Adapters 1 umgriffen ist. Das Lagerelement 18 ist an einem Kragen 19 befestigt, der ringförmig auf der Unterseite des Bodens 2 bzw. der Grundplatte 14 nach unten vorstehend angeformt ist.

Die Führungsscheibe 17 hat eine mittige durchgehende Öffnung 20, die hier eine kreisförmige Querschnittsfläche hat. In der Öffnung 20 befindet sich mittig der Sockel 13 und die Platte 15 mit den beiden Vorsprüngen 12. In dem Umfang der Öffnung 20 sind einander gegenüberliegend zwei im wesentlichen rechteckige Einsteckbereiche 21 ausgenommen, die die Fläche der Öffnung 20 nach außen erweitern.

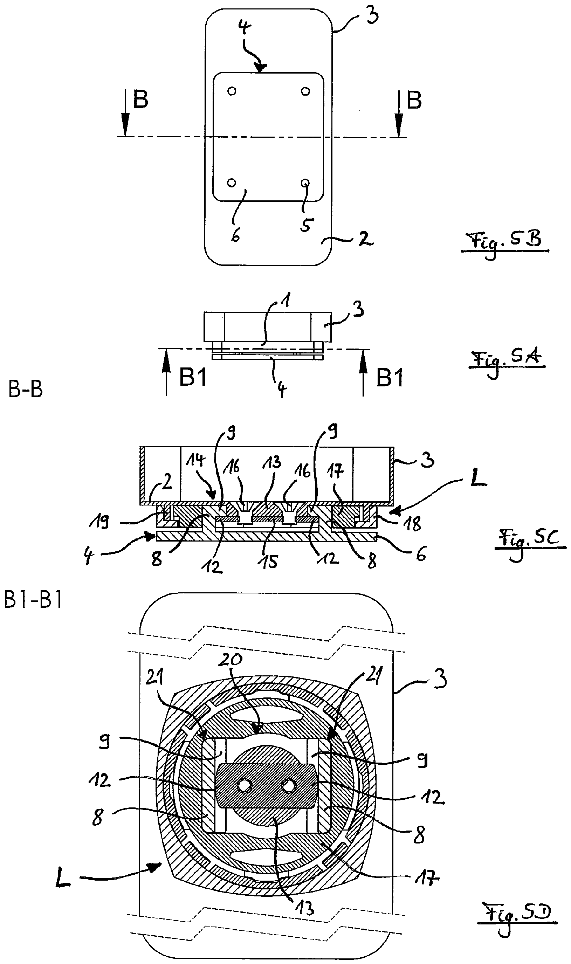

Die Führungsscheibe 17 kann zwischen zwei um 180° zueinander versetzten Freigabepositionen F (Figur 4E) und zwei jeweils dazwischen liegenden Verriegelungspositionen L (Figur 5D) verdreht werden. Nicht näher dargestellte elastisch wirksame Rastmittel halten die Führungsscheibe 17 in jeder Freigabeposition F und in jeder Verriegelungsposition L rastend fest. So wird ein unbeabsichtigtes Verdrehen der Führungsscheibe 17 zuverlässig verhindert.

Wenn sich die Führungsscheibe in einer Freigabeposition F befindet kann das Gehäuse 3 mit dem der Adapter 1 auf die Haltevorrichtung 4 aufgesteckt werden. Dabei nehmen die beiden Einsteckbereiche 21 jeweils eine Führungswange 8 mit dem Haltesteg 9 auf (Figuren 4D und 4E).

Wenn danach das Gehäuse 3 mit dem auf die Haltevorrichtung 4 aufgesteckten Adapter 1 um 90° gedreht wird, drehen sich alle fest mit dem Gehäuse 3 und dem Adapter 1 verbunden Elemente mit. Nur die Führungsscheibe 17 wird dabei durch die beiden Führungswangen 8 der Haltevorrichtung 4 in ihrer Position festgehalten, so dass sie relativ zu den anderen Elementen des Adapters 1 um 90° in eine Verriegelungsposition L verdreht wird. In der Verriegelungsposition L werden die einander zugewandten Haltestege 9 der Haltevorrichtung 4 von den beiden Vorsprüngen 12 derart untergriffen, dass sie sich zwischen den Vorsprüngen 12 und dem Boden 2 des Gehäuses 3 bzw. der Grundplatte 14 des Adapters 1 befinden (Figuren 5C und 5D). Ein Abziehen des Adapters 1 von der Haltevorrichtung 4 wird hierdurch verhindert, so dass das Gehäuse 3 sicher an er Haltevorrichtung 4 gehalten bzw. befestigt ist.

Die Führungswangen 8 mit den daran angeordneten Haltestegen 9 einer zum Zusammenwirken mit dem Adapter 1 geeigneten Haltevorrichtung 4 können also nur dann in die Einsteckbereiche 21 der Öffnung 20 der Führungsscheibe 17 eingesteckt werden, wenn sich die Führungsscheibe 17 in einer Freigabeposition F befindet. Wenn sich die Führungsscheibe hingegen in einer Verriegelungsposition L befindet, sind die Haltestege 9 der beiden Führungswangen 8 jeweils zwischen der Grundplatte 14 des Adapters 1 und den Vorsprüngen 12 gehalten, so dass die Haltevorrichtung 4 nicht aus dem Adapter 1 herausgezogen werden kann und an diesem verriegelt ist.

## Patentansprüche

1. Adapter (1), der zur lösbaren Befestigung eines tragbaren und handhaltbaren Gerätes oder Gegenstandes an einer Haltevorrichtung (4) bestimmt ist,
wobei der Adapter (1) eine Grundplatte (14) und zwei hiermit verbundene oder einstückig hiermit ausgeführte Vorsprünge (12) umfasst, die in einem Abstand zu der Grundplatte (14) vorstehen,
und wobei entweder die Grundplatte (14) Mittel zum Anbringen des Adapters (1) an einem tragbaren und handhaltbaren Gerät oder Gegenstand (3) aufweist oder wobei die Grundplatte (14) fest an einem tragbaren und handhaltbaren Gerät oder Gegenstand (3) angebracht oder einstückig damit ausgebildet ist,
**dadurch gekennzeichnet,**
**dass** die zwei Vorsprünge (12) sich in einander entgegengesetzter Richtung von einander weg erstrecken,
und **dass** an der Grundplatte (14) eine hierzu parallele Führungsscheibe (17) gelagert ist, die zwischen mindestens einer Freigabeposition (F) und mindestens einer Verriegelungsposition (L) zumindest begrenzt verdrehbar ist,
wobei die Führungsscheibe (17) eine mittige Öffnung (20) aufweist, in der sich die beiden Vorsprünge (12) erstrecken,
und wobei die Öffnung (20) in ihrer Kontur zwei Einsteckbereiche (21) umfasst, in die eine zum Zusammenwirken mit dem Adapter (1) geeignete Haltevorrichtung (4) zumindest teilweise einsteckbar ist, wenn die Führungsscheibe (17) sich in der Freigabeposition (F) befindet.

2. Adapter (1) nach Anspruch 1, **dadurch gekennzeichnet, dass** die beiden Vorsprünge (12) sich zumindest teilweise in jeweils einen Teil eines Einsteckbereichs (21) der Öffnung (20) der Führungsscheibe (17) erstrecken, wenn diese sich in der Verriegelungsposition (L) befindet.

3. Adapter (1) nach Anspruch 1 oder 2, **dadurch gekennzeichnet, dass** die Führungsscheibe (17) an ihrem Außenumfang kreisrund ausgebildet ist, und dass ihr Außenumfang zur Ausführung ihrer drehbaren Lagerung zumindest abschnittsweise von mindestens einem an der Grundplatte (14) befestigten, insbesondere ringförmig ausgebildeten Lagerelement (18) übergriffen ist.

4. Adapter (1) nach Anspruch 3, **dadurch gekennzeichnet, dass** die beiden Vorsprünge (12) über einen zentralen Sockel (13) mit der Grundplatte (14) verbunden sind, von dem aus sie sich einander entgegengesetzt nach außen erstrecken, wobei der Sockel (13) sich in der mittigen Öffnung (20) der Führungsscheibe (17) erstreckt und auf die Führungsscheibe (17) zentriert ist.

5. Adapter (1) nach einem der vorherigen Ansprüche, **dadurch gekennzeichnet, dass** die beiden Vorsprünge (12) als flache Stege ausgebildet sind, die in einem Abstand parallel zu der Grundplatte (14) verlaufen.

6. Adapter (1) nach einem der vorherigen Ansprüche, **dadurch gekennzeichnet, dass** er Rastmittel umfasst, durch welche die Führungsscheibe (17) in der mindestens einen Verriegelungsposition (L) und in der mindestens einen Freigabeposition (F) rastend festlegbar ist.

7. Adapter (1) nach einem der vorherigen Ansprüche, **dadurch gekennzeichnet, dass** die Führungsscheibe (17) in zwei um 180° relativ zueinander versetzte Freigabepositionen (F) drehbar ist, zwischen denen je eine Verriegelungsposition (L) oder je zwei oder je drei winklig gleichmäßig verteilte oder ungleichmäßig verteilte Verriegelungspositionen (L) vorgesehen sind.

8. Adapter (1) nach einem der vorherigen Ansprüche, **dadurch gekennzeichnet, dass** die beiden Einsteckbereiche (21) der mittigen Öffnung (20) der Führungsscheibe (17) nach außen jeweils durch eine gerade Seitenwand begrenzt sind, wobei die beiden Seitenwände parallel zueinander und senkrecht zu einer radialen Richtung der Führungsscheibe (17) ausgerichtet sind.

9. Adapter (1) nach einem der vorherigen Ansprüche, **dadurch gekennzeichnet, dass** er zur lösbaren Verriegelung eines tragbaren und handhaltbaren Gerätes oder Gegenstandes (3) an einer Haltevorrichtung (4) bestimmt ist, welche eine Basisplatte (6) mit zwei parallel zueinander ausgerichteten geraden Führungswangen (8) aufweist, die senkrecht auf der Basisplatte (6) vorstehen und an deren von der Basisplatte (6) abgewandten freien Ende jeweils ein Haltesteg (9) sich in Richtung zu der jeweils anderen Führungswange (8) erstreckt,
wobei die beiden Einsteckbereiche (21) in der Kontur der Öffnung (20) der Führungsscheibe (17) derart an die Haltevorrichtung (4) angepasst sind, dass diese mit ihren beiden einander zugewandten Haltestegen (9) in die beiden Einsteckbereiche (21) einsteckbar ist, wenn die Führungsscheibe (17) sich in einer Freigabeposition (F) befindet, und wobei die beiden eingesteckten Haltestege (9) von den beiden Vorsprüngen (12) zumindest teilweise übergriffen sind, wenn die Führungsscheibe (17) sich in einer Verriegelungsposition (L) befindet.

10. Adapter (1) nach Anspruch 9, **dadurch gekennzeichnet, dass** die beiden Einsteckbereiche (21) mit ihren zueinander parallelen Seitenwänden zumindest in Bezug auf die Länge und auf den Abstand der Seitenwände voneinander derart an eine zum Zusammenwirken mit dem Adapter (1) geeignete Haltevorrichtung (4) angepasst sind, dass deren zwei Führungswangen (8) mit den daran angeordneten Haltestegen (9) formschlüssig in die beiden Einsteckbereiche (21) der Öffnung (20) einsteckbar sind.

11. Adapter (1) nach einem der vorherigen Ansprüche, **dadurch gekennzeichnet, dass** er in den Boden (2) eines Gehäuses (3) oder einer Dose oder in den Boden einer zur Aufnahme einer tragbaren elektronischen Vorrichtung, insbesondere eines Mobiltelefons oder eines Navigationsgerätes vorgesehenen Halterung integriert ist.

12. Kombination eines Adapter (1) nach einem der vorherigen Ansprüche mit einer Haltevorrichtung (4), die eine Basisplatte (6) mit zwei in einem Abstand voneinander und parallel zueinander ausgerichteten geraden Führungswangen (8) aufweist, die auf der Basisplatte (6) vorstehen und an deren von der Basisplatte (6) abgewandten Ende jeweils ein Haltesteg (9) sich in Richtung zu der jeweils anderen Führungswange (8) erstreckt.

## Claims

1. Adapter (1) which is intended for releasable fastening of a portable and hand-held equipment or object to a holding device (4),
wherein the adapter (1) comprises a base plate (14) and two protrusions (12), connected with or designed integrally with said base plate, which protrusions protrude at a distance from the base plate (14),
and wherein either the base plate (14) has means for attaching the adapter (1) to a portable and hand-held equipment or object (3) or wherein the base plate (14) is attached securely to a portable and hand-held equipment or object (3) or is formed integrally therewith,
**characterised in that**
the two protrusions (12) extend away from one another in opposite directions,
and **in that** a guide disk (17) parallel thereto is supported on the base plate (14), which disk is at least to a limited extent rotatable between at least one release position (F) and at least one locking position (L),
wherein the guide disk (17) has a central opening (20) in which the two protrusions (12) extend,
and wherein the opening (20) comprises in its contour two plug-in areas (21) into which a holding device (4) that is suitable for interacting with the adapter (1) can be at least partially plugged when the guide disk (17) is in the release position (F).

2. Adapter (1) according to claim 1, **characterised in that** the two protrusions (12) extend at least partially into respectively one part of a plug-in area (21) of the opening (20) of the guide disk (17) when the latter is in the locking position (L).

3. Adapter (1) according to claim 1 or 2, **characterised in that** the guide disk (17) is formed with a circular outer circumference,
and **in that** for embodying the rotatable bearing arrangement thereof, its outer circumference is overlapped at least in sections by at least one bearing element (18) that is fastened to the base plate (14) and is designed in particular in a ring-shaped manner.

4. Adapter (1) according to claim 3, **characterised in that** the two protrusions (12) are connected via a central mount (13) with the base plate (14), from which mount they extend outwardly in opposite directions, wherein the mount (13) extends in the central opening (20) of the guide disk (17) and is centred on the guide disk (17).

5. Adapter (1) according to any of the preceding claims, **characterised in that** the two protrusions (12) are formed as flat webs which extend at a distance parallel to the base plate (14).

6. Adapter (1) according to any of the preceding claims, **characterised in that** it comprises detent means by which the guide disk (17) can be latchingly secured in the at least one locking position (L) and in the at least one release position (F).

7. Adapter (1) according to any of the preceding claims, **characterised in that** the guide disk (17) can be rotated into two release positions (F) that are offset by 180° relative to one another, between which positions in each case one locking position (L) or in each case two or in each case three locking positions (L), distributed evenly or unevenly at an angle, are provided.

8. Adapter (1) according to any of the preceding claims, **characterised in that** the two plug-in areas (21) of the central opening (20) of the guide disk (17) are delimited to the outside respectively by a straight side wall, wherein the two side walls are aligned parallel to one another and perpendicular to a radial direction of the guide disk (17).

9. Adapter (1) according to any of the preceding claims, **characterised in that** it is intended for releasable locking of a portable and hand-held equipment or object (3) on a holding device (4), which has a base plate (6) having two straight guide cheeks (8) aligned parallel to one another which protrude perpendicularly to the base plate (6) and, at the free end of which - that faces away from the base plate (6) - in each case a holding web (9) extends in the direction of the respective other guide cheek (8),
wherein the two plug-in areas (21) in the contour of the opening (20) of the guide disk (17) are adapted to the holding device (4) such that said holding device can be inserted with its two holding webs (9), which face one another, into the two plug-in areas (21) when the guide disk (17) is in a release position (F), and wherein the two plugged-in holding webs (9) are at least partially overlapped by the two protrusions (12) when the guide disk (17) is in a locking position (L).

10. Adapter (1) according to claim 9, **characterised in that** the two plug-in areas (21) with their side walls parallel to one another are adapted, at least in respect of the length and of the distance of the side walls from one another, to a holding device (4) that is suitable for interacting with the adapter (1), such that their two guide cheeks (8) can be plugged in with the holding webs (9) disposed thereon a form-fitting manner into the two plug-in areas (21) of the opening (20).

11. Adapter (1) according to any of the preceding claims, **characterised in that** it is integrated into the base (2) of a housing (3) or of a socket or into the base of a holder provided for receiving a portable electronic device, in particular a mobile telephone or a navigation equipment.

12. Combination of an adapter (1) according to any of the preceding claims having a holding device (4) which has a base plate (6) having two straight guide cheeks (8) that are aligned at a distance from one another and parallel to one another, which guide cheeks protrude on the base plate (6) and, at the ends of which that face away from the base plate (6), in each case a holding web (9) extends in the direction of the respective other guide cheek (8).

## Revendications

1. Adaptateur (1) destiné à fixer de manière amovible un appareil ou un objet portatif et pouvant être tenu dans la main au niveau d'un dispositif de retenue (4), dans lequel l'adaptateur (1) comprend une plaque-support (14) et deux saillies (12) reliées à celle-ci ou faisant partie intégrante de celle-ci, qui font saillie à une certaine distance de la plaque-support (14),
et dans lequel la plaque-support (14) présente un moyen permettant d'installer l'adaptateur (1) au niveau d'un appareil ou d'un objet portatif et pouvant être tenu dans la main (3) ou bien dans lequel la plaque-support (14) est installée fixe au niveau d'un appareil ou d'un objet portatif et pouvant être tenu dans la main (3) ou est réalisée de manière à faire partie intégrante de celui-ci,
**caractérisé en ce que**
les deux saillies (12) s'étendent dans des directions opposées l'une de l'autre,
et **en ce qu'**un disque de guidage (17), parallèle à la plaque-support (14) et qui peut être pivoté au moins de manière limitée entre au moins une position de libération (F) et au moins une position de verrouillage (L), est monté au niveau de ladite plaque de base,
dans lequel le disque de guidage (17) présente une ouverture centrale (20) au sein de laquelle s'étendent les deux saillies (12),
et dans lequel l'ouverture (20) comprend dans son contour deux régions d'enfichage (21) au sein desquelles un dispositif de retenue (4) apte à coopérer avec l'adaptateur (1) peut être au moins partiellement enfiché, lorsque le disque de guidage (17) se trouve dans la position de libération (F).

2. Adaptateur (1) selon la revendication 1, **caractérisé en ce que** les deux saillies (12) s'étendent au moins partiellement dans respectivement une partie d'une région d'enfichage (21) de l'ouverture (20) du disque de guidage (17) lorsqu'elles se trouvent dans la position de verrouillage (L).

3. Adaptateur (1) selon la revendication 1 ou 2, **caractérisé en ce que** le disque de guidage (17) est réalisé sous une forme circulaire au niveau de sa périphérie extérieure,
et **en ce que** sa périphérie extérieure est recouverte au moins par sections d'au moins un élément formant palier (18) réalisé en particulier sous une forme annulaire et fixé au niveau de la plaque-support (14), afin de constituer un montage pouvant pivoter sur palier de ladite périphérie extérieure.

4. Adaptateur (1) selon la revendication 3, **caractérisé en ce que** les deux saillies (12) sont reliées à la plaque-support (14) par l'intermédiaire d'un culot central (13) à partir duquel elles s'étendent vers l'extérieur à l'opposé l'une de l'autre, dans lequel le culot (13) s'étend dans l'ouverture centrale (20) du disque de guidage (17) et est centré sur le disque de guidage (17).

5. Adaptateur (1) selon l'une quelconque des revendications précédentes, **caractérisé en ce que** les deux saillies (12) sont réalisées sous la forme d'avancées plates qui s'étendent de manière parallèle à la plaque-support (14) à une certaine distance de celle-ci.

6. Adaptateur (1) selon l'une quelconque des revendications précédentes, **caractérisé en ce qu'**il comprend des moyens d'encliquetage grâce auquel le disque de guidage (17) peut être fixé par encliquetage dans la au moins une position de verrouillage (L) et dans la au moins une position de libération (F).

7. Adaptateur (1) selon l'une quelconque des revendications précédentes, **caractérisé en ce que** le disque de guidage (17) peut être pivoté pour venir dans deux positions de libération (F) décalées de 180° l'une par rapport à l'autre et entre lesquelles sont prévues respectivement une position de verrouillage (L) ou respectivement deux ou respectivement trois positions de verrouillage (L) réparties angulairement de manière uniforme ou inégale.

8. Adaptateur (1) selon l'une quelconque des revendications précédentes, **caractérisé en ce que** les deux régions d'enfichage (21) de l'ouverture centrale (20) du disque de guidage (17) sont délimitées vers l'extérieur respectivement par une paroi latérale droite, dans lequel les deux parois latérales sont orientées de manière parallèle l'une à l'autre et de manière perpendiculaire à une direction radiale du disque de guidage (17).

9. Adaptateur (1) selon l'une quelconque des revendications précédentes, **caractérisé en ce qu'**il est destiné à verrouiller de manière amovible un appareil ou objet portatif et pouvant être tenu dans la main (3) au niveau d'un dispositif de retenue (4) qui présente une plaque de base (6) munie de deux piles de guidage (8) rectilignes orientées de manière parallèle l'une à l'autre qui font saillie de manière perpendiculaire sur la plaque de base (6) et au niveau de l'extrémité libre, détournée de la plaque de base (6), desquelles respectivement une avancée de retenue (9) s'étend en direction de l'autre pile de guidage (8) respective,
dans lequel les deux régions d'enfichage (21) du contour de l'ouverture (20) du disque de guidage (17) sont adaptées au dispositif de retenue (4) de telle manière qu'elles peuvent être enfichées dans les deux régions d'enfichage (21) avec leurs deux avancées de retenue (9) se faisant face lorsque le disque de guidage (17) se trouve dans une position de libération (F), et dans lequel les deux avancées de retenue (9) enfichées sont recouvertes au moins partiellement par les deux saillies (12) lorsque le disque de guidage (17) se trouve dans une position de verrouillage (L).

10. Adaptateur (1) selon la revendication 9, **caractérisé en ce que** les deux régions d'enfichage (21) avec leurs parois latérales parallèles l'une à l'autre sont adaptées à un dispositif de retenue (4) apte à coopérer avec l'adaptateur (1) au moins en ce qui concerne la longueur et la distance des parois latérales l'une par rapport à l'autre de telle manière que leurs deux piles de guidage (8) munies des avancées de retenue (9) agencées au niveau de celles-ci peuvent être enfichées avec complémentarité de forme dans les deux régions d'enfichage (21) de l'ouverture (20).

11. Adaptateur (1) selon l'une quelconque des revendications précédentes, **caractérisé en ce qu'**il est intégré dans le fond (2) d'un boîtier (3) ou d'une boîte ou dans le fond d'un support prévu pour recevoir un dispositif électronique portatif, en particulier un téléphone portable ou un appareil de navigation.

12. Combinaison d'un adaptateur (1) selon l'une quelconque des revendications précédentes avec un dispositif de retenue (4) qui présente une plaque de base (6) munie de deux piles de guidage (8) rectilignes orientées de manière parallèle l'une à l'autre et se trouvant à une certaine distance l'une de l'autre et qui font saillie sur la plaque de base (6), et au niveau de l'extrémité, détournée de la plaque de base (6), desquelles respectivement une avancée de retenue (9) s'étend en direction de l'autre pile de guidage (8) respective.
